(19) Europäisches Patentamt

European Patent Office

Office européen des brevets

(11) Veröffentlichungsnummer: **0 335 143**

**A2**

(12) **EUROPÄISCHE PATENTANMELDUNG**

(21) Anmeldenummer: 89104140.2

(22) Anmeldetag: 09.03.89

(51) Int. Cl.⁴: **F01N 3/02 , B03C 3/00 , B03C 3/49 , B03C 3/70 , B03C 3/86**

(30) Priorität: 30.03.88 DE 3810910

(43) Veröffentlichungstag der Anmeldung:
04.10.89 Patentblatt 89/40

(84) Benannte Vertragsstaaten:
AT ES FR GB IT NL SE

(71) Anmelder: Müller, Johannes Alfons
Panoramastrasse 26
D-7980 Ravensburg 19(DE)

Anmelder: Stingel, Wolfgang
Am Buchenwald 39
D-8133 Feldafing(DE)

(72) Erfinder: Müller, Johannes Alfons
Panoramastrasse 26
D-7980 Ravensburg 19(DE)
Erfinder: Stingel, Wolfgang
Am Buchenwald 39
D-8133 Feldafing(DE)

(54) Elektroabscheider zur Abscheidung von Russpartikeln aus dem Abgasstrom von Verbrennungseinrichtungen bzw. Verbrennungsmaschinen.

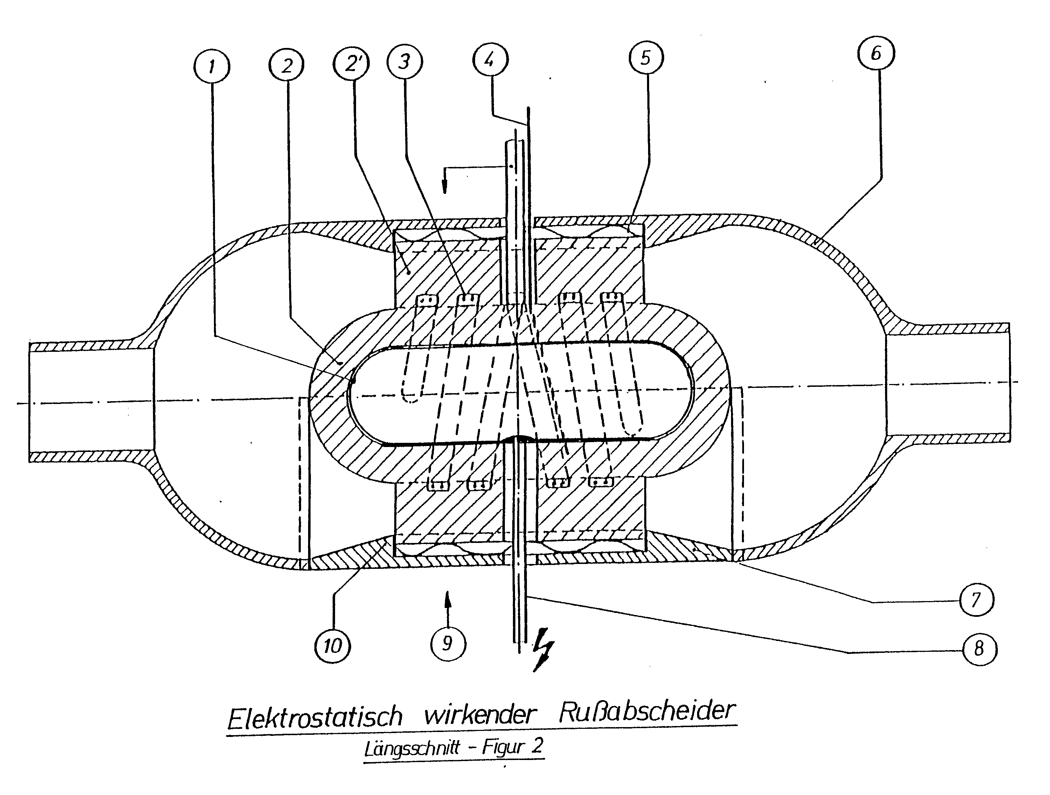

㉗ Die Erfindung betrifft eine Vorrichtung zum Abscheiden von elektrisch leitfähigen Partikeln wie Ruß und dergleichen, insbesondere zum Abscheiden von Rußpartikeln aus dem Abgasstrom von Dieselbrennkraftmaschinen mittels eines von den Gasen durchströmten Elektroabscheiders entsprechend der in Fig. 2 dargestellten Ausführung, wobei durch den Einfluß eines elektrostatischen Feldes - welches nach Zuführen einer Hochspannung über die Hochspannungszuführung (8) zwischen der Hochspannungselektrode (1) und dem auf Massepotential liegenden Gehäuse (6) bzw. Gehäusedeckel (7) aufgebaut wird - feinstoffliche Rußpartikel in größere Agglomerate überführt werden, die in einem nachgeschalteten Filtersystem ausgefiltert werden können. Die im Keramikisolator (2) zentralliegende Hochspannungselektrode (1) ist über die beiden Distanzstege (2') des Keramikisolators (2), die Fixiernasen (10) sowie die Federelemente (5) innerhalb des Gehäuses (6/7) fixiert. Agglomerate, die sich auf dem Keramikisolator (2) niederschlagen und dadurch den Durchflußwiderstand im Abgasstrom durch Verstopfen erhöhen, werden durch den - mittels Temperatursensor (4) - thermostatisch geregelten, elektrischen Heizleiter (3) abgebrannt.

*Elektrostatisch wirkender Rußabscheider*
*Langsschnitt - Figur 2*

### Elektroabscheider zur Abscheidung von Rußpartikeln aus dem Abgasstrom von Verbrennungseinrichtungen bzw. Verbrennungsmaschinen

In Betracht gezogene Druckschriften:

1. Offenlegungsschrift DE 33 05 601 A 1 (B 03 C/40; F 01 N 3/08)

2. Patentschrift DBP 10 17 147 (B 01 D 5/12 E)

3. GB - Patent 1 224 639 (B 03 C 3/06)

4. US - Patent 3,585,122 (B 01 D 13/02) und (B 03 C 5/00)

5. JP - Patent 54-14 88 03 (F 01 N 3/02 R0)

6. JP - Patent 59-85 115 A (B 03 C 3/02)

7. Offenlegungsschrift DE 38 04 779 A (F 01 N 3/02)

8. US - Patent 44 41 971 (F 01 N 3/00; B 01 J 1/00; B 01 J 8/00)

Die Erfindung betrifft einen Elektroabscheider zur Abscheidung von Rußpartikeln aus dem Abgasstrom von Verbrennungseinrichtungen bzw. Verbrennungsmaschinen der im Oberbegriff des Anspruchs 1 bzw. 2 genannten Art.

Derartige Elektroabscheider sind aus der DE 3305601 A1 bzw. der JP 5985115 bekannt.

Elektroabscheider sind allgemein bekannt und werden vorwiegend mit dazu eingesetzt, um Partikel aus Gasgemischen oder Flüssigkeiten (Suspensionen bzw. chem. Verbindungen) abzusondern bzw. in bezug auf nachfolgende chemische Reaktionen zu sensibilisieren.

Bei Gasgemischen sollen unter Einwirkung eines starken elektrischen Feldes Partikel zu größeren Gebilden zusammengeführt werden, so daß diese mit nachgeschalteten physikalischen Einrichtungen wie z. B. Mikrofilter, keramische Filter, elektrisch beheizte Abbrennfilter, Zentrifugen, Schleudern abgeschieden oder durch elektrische Hochspannungsentladung in eine andere Verbindung überführt werden.

Damit der Elektroabscheider seine Aufgabe erfüllt, muß zur Erzeugung eines elektrischen Feldes zwischen dem Gehäuse und der konzentrisch angeordneten metallischen Elektrode des Abscheiders eine hohe elektrische Spannung angelegt werden, damit sich die Partikel zu größeren Gebilden zusammenschließen.

Ein Teil dieser Gebilde schlägt sich an den Elektroden nieder. Im Falle der Abscheidung von Rußpartikeln bildet sich eine elektrisch leitende Rußschicht auf den Elektroden, die zu Kurzschlüssen und damit zum Ausfall des Elektroabscheiders führt. Eine zuverlässige, kontinuierliche und sichere Arbeitsweise ist bei Systemen mit offenen Elektroden nicht möglich.

Der Erfindung liegt die Aufgabe zugrunde, einen Elektroabscheider zur Abscheidung von Rußpartikeln zu schaffen, bei dem die Betriebssicherheit verbessert ist sowie ein preisgünstiger und robuster Aufbau bei erhöhter Reparaturfreundlichkeit erreicht wird. Diese Aufgabe wird bei einem gattungsgemäßen Elektroabscheider durch die kennzeichnenden Merkmale des Anspruchs 1 bzw. 2 gelöst.

Die erfindungsgemäße Vorrichtung mit den kennzeichnenden Merkmalen des Anspruchs 1 bzw. 2 hat demgegenüber den Vorteil, daß das System mit isolierter Hochspannungselektrode betrieben werden kann, was der Betriebssicherheit entgegenkommt. Rußablagerungen an der Hochspannungselektrode werden durch die Heizeinrichtung verhindert, weshalb dieses System einen ungehinderten Gasfluß zuläßt. Durch die thermostatische Regelung der Heizleistung paßt sich das System an den jeweiligen Betriebszustand an. Ein besonderer Vorteil ist der sehr einfach gehaltene, preisgünstige und robuste Aufbau des Elektroabscheiders nach der Erfindung mit wenigen unkritischen Bauelementen. Dadurch sind eventuelle Reparaturen problemlos und schnell durchführbar.

Die Erfindung ist anhand eines in der Zeichnung dargestellten Ausführungsbeispiels im folgenden näher beschrieben; es zeigen:

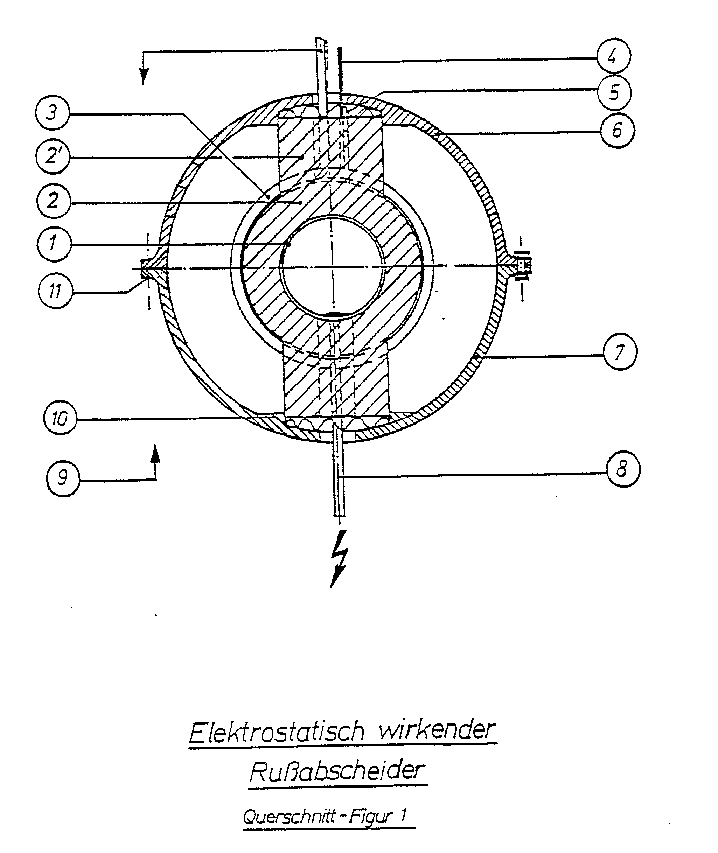

Fig. 1 einen Querschnitt eines Elektroabscheiders

Fig. 2 einen Längsschnitt des in Fig. 1 dargestellten Elektroabscheiders

Ein Gehäusedeckel 7 ist mit einem Gehäuse 6, das als Gegenelektrode des Elektroabscheiders funktioniert, mittels Schraubverbindung lösbar verbunden. Das komplette Gehäuse ist an einem Masseanschluss 11 elektrisch auf Massepotential zu legen.

Innerhalb des Gehäuses ist ein Keramikisolator 2 mit Distanzstegen 2' oben am Gehäuse 6 und unten am Gehäusedeckel 7 durch Fixiernasen 10 am Gehäuse 6 und Gehäusedeckel 7 fixiert. Durch zwischen den Distanzstegen 2' des Keramikisolators 2 und dem Gehäuse 6 bzw. Gehäusedeckel 7 liegende Federelemente 5 wird eine Vorspannung erzielt, durch die die unterschiedlichen Wärmeausdehnungskoeffizienten der verschiedenen Materialien ausgeglichen werden.

Um den äußeren Umfang des zylindrischen Keramikisolators 2 ist ein elektrischer Heizleiter 3 gewendelt. Der Heizleiter 3 sowie ein Temperatursensor 4 werden innerhalb des oberen Distanzsteges 2' des Keramikisolators 2 durch ein Loch im Federelement 5 und Gehäuse 6 nach außen geführt 9.

Die innere Wandung des zylindrischen Keramikisolators 2 ist hitzefest metallisiert und wirkt als Hochspannungselektrode 1 gegenüber dem auf Massepotential liegenden Gehäuse 6 und Gehäusedeckel 7. Die Hochspannungszuführung 8 wird durch ein Loch im Gehäusedeckel 7 und Federelement 5 innerhalb des unteren Distanzsteges 2' des Keramikisolators 2 zur hitzebeständig metallisierten inneren Wandung des Keramikisolators 2 - der Hochspannungselektrode 1 - geführt.

Grundsätzlich kann die Plazierung von Hochspannungselektrode 1 und Heizleiter 3 getauscht werden, so daß der Keramikisolator 2 von innen beheizt wird und die Hochspannungselektrode an der Außenseite des Keramikisolators 2 aufgebracht wird.

## Ansprüche

1. Elektroabscheider zur Abscheidung von Ruß-partikeln für Verbrennungseinrichtungen bzw. Ver-brennungsmaschinen mit einer isolierten Hoch-spannungselektrode, einer Gegenelektrode und ei-ner elektrischen Heizeinrichtung zur Verbrennung der Rußpartikel dadurch gekennzeichnet, daß die isolierte Hochspannungselektrode als zylindrischer Keramikisolator (2) mit metallisierter Innenwandung ausgebildet ist.

2. Elektroabscheider zur Abscheidung von Ruß-partikeln für Verbrennungseinrichtungen bzw. Ver-brennungsmaschinen mit einer isolierten Hoch-spannungselektrode, einer Gegenelektrode und ei-ner elektrischen Heizeinrichtung zur Verbrennung der Rußpartikel dadurch gekennzeichnet, daß als Heizeinrichtung ein um den äußeren Umfang des Isolators gelegter Heizleiter (3) vorgesehen ist.

3. Elektroabscheider zur Abscheidung von Ruß-partikeln für Verbrennungseinrichtungen bzw. Ver-brennungsmaschinen, mit einer isolierten Hoch-spannungselektrode, einer Gegenelektrode und ei-ner elektrischen Heizeinrichtung zur Verbrennung der Rußpartikel dadurch gekennzeichnet, daß die isolierte Hochspannungselektrode als zylindrischer Keramikisolator (2) mit metallisierter zylindrischer Außenseite ausgebildet ist.

4. Elektroabscheider zur Abscheidung von Ruß-partikeln für Verbrennungseinrichtungen bzw. Ver-brennungsmaschinen, mit einer isolierten Hoch-spannungselektrode, einer Gegenelektrode und ei-ner elektrischen Heizeinrichtung zur Verbrennung der Rußpartikel dadurch gekennzeichnet, daß als Heizeinrichtung ein innen angeordneter Heizleiter (3) vorgesehehen ist.

5. Elektroabscheider nach den Ansprüchen 1 und 2 oder 3 und 4, dadurch gekennzeichnet, daß der Keramikisolator (2) mittels Distanzstegen (2') am Gehäuse (6) befestigt ist.

6. Elektroabscheider nach den Ansprüchen 1 bis 5, dadurch gekennzeichnet, daß in den Distanzstegen (2') des Keramikisolators (2) Hohlräume zur Aufnahme von Versorgungsleitungen ausgebildet sind.

7. Elektroabscheider nach den Ansprüchen 1 bis 6, dadurch gekennzeichnet, daß zwischen den Distanzstegen (2') des Isolators (2) und dem Gehäuse (6) Federelemente (5) vorgesehen sind.

8. Elektroabscheider nach den Ansprüchen 1 bis 7, dadurch gekennzeichnet, daß ein Temperatursensor (4) zur thermostatischen Regelung des Heizstroms vorgesehen ist.

Elektrostatisch wirkender
Rußabscheider

Querschnitt - Figur 1

Elektrostatisch wirkender Rußabscheider

Längsschnitt – Figur 2